# EUROPEAN PATENT SPECIFICATION

(11) **EP 3 746 694 B1**
(45) Date of publication and mention of the grant of the patent: **11.03.2026**
(21) Application number: 19707471.9
(22) Date of filing: 30.01.2019
(51) Int. Cl.: F16L 55/00, G01K 1/14

(54) **TUBE FOR CONVEYING FLUIDS**
SCHLAUCH ZUM FÖRDERN VON FLÜSSIGKEITEN
TUBE DE TRANSPORT DE FLUIDES

(30) Priority: 01.02.2018 IT 201800002307
(43) Date of publication of application: 09.12.2020
(73) Proprietor: ELBI International S.p.A., 10129 Torino (IT)
(72) Inventor: AITA, Luigi, 10090 Gassino Torinese (Torino) (IT); MAGNONE, Luca, 10025 Pino Torinese (Torino) (IT)
(74) Representative: Savoca, Agatino
(86) International application number: PCT/IB2019/050732
(87) International publication number: WO 2019/150267

(56) References cited:
- EP-A1- 3 070 444
- EP-B1- 0 004 673
- JP-A- 2014 052 054
- US-A1- 2015 252 922
- .: "Operating Instructinos TF04 - Temperature sensor with installation armature", 20 August 2008 (2008-08-20), pages 1 - 9, XP055943298, Retrieved from the Internet <URL:https://www.pkp.de/images/produkte/pdf_bed/tf04-bed-e.pdf> [retrieved on 20220715]

## Description

### Technical field

The present invention is, in general, in the field of hydraulics; in particular, the invention refers to a section of tube for conveying fluids, equipped with a system to make the temperature signal available outside of such tube section, without significant disturbances in the value of the signal and in the propagation time (such as delays).

### Summary of the invention

Tubes are known for conveying fluids, in particular hydraulic tubes for conveying water (or in general thermal vector fluids also in the form of mixtures) into heating systems, for example to and from the hot water production boiler or inside such boilers, to put the components of the same boiler (such as heat generator, expansion vessel, pumps, valves, hydraulic units) in hydraulic communication with each other. "Boilers" means, by way of non-exhaustive example, boilers for the generation of heat for residential use, of the wall-mounted or floor-standing type. Likewise, hydraulic tubes may be present in heat and cold generation systems such as heat pumps, solar, geothermal or biomass systems, or district heat distribution systems.

Instead of metal pipes, which were mostly used in the past, flexible plastic tubes are now preferred, whether covered or not with sheaths or braids (usually made of rubber) which give the tube mechanical strength and/or thermal insulation.

However, such configuration hampers or prevents contact sensors from detecting the temperature of the fluid from outside the tube carrying it, which is particularly useful when the fluid is heated. In effect, the material with which these tubes are made is characterized by a very low thermal conductivity, and therefore it becomes very difficult to reliably measure the temperature of the fluid by means of simple contact with the outer surface of the tube.

An example of a multi-layered tube, comprising a radially innermost tube conveying the fluid, an outermost tubular housing, and a probe sensor having a stem crossing the latter up to get in contact with said innermost tube, is known from EP 3 070 444 A1. However, such a sensor is not able to optimally detect the temperature of the fluid, because the whole thickness of the innermost tube is interposed between the fluid and the stem. A further example of prior art is known form EP 0 004 673 B1, which discloses a hose fitting consisting of a nozzle composed of an electrically nonconductive plastic provided with a radially outward-projecting flange. Nevertheless, such a configuration is not optimized for detecting the temperature of the fluid.

An object of the present invention is to overcome such problems by creating a thermal bridge between the conveyed fluid and the radially outermost portion of the tube so that the latter assumes a temperature indicative of the temperature of the fluid (i.e. as close as possible to the temperature of the fluid, preferably within a minimum time delay, for example from a few seconds up to about 20 seconds); this temperature may be detected by means of a special sensor applied to such radially outermost portion (which, as will be better appreciated hereinafter, may coincide with at least part of an outer tubular covering, if the portion of the tube is radially stratified).

"Sensor" is to be understood by way of non-exhaustive example as a thermostat (e.g. bimetallic, wax), a resistance thermometer (e.g. NTC, PTC types), a thermocouple or other systems known in the art for a continuous or instantaneous reading over time.

To obtain such a result, a tube section has at least one thermally conductive portion, which extends from the radially innermost part of such tube section (in contact with the fluid) towards the radially outermost side of the tube.

Such tube section may be an axially extended tube section, or an angular tube section extending circumferentially. Such portion of the tube may in particular be an end portion of the tube, or a hydraulic connector that allows the tube to be connected to a different duct or a portion of the hydraulic system or hydraulic component via an interface as in common hydraulic practice (flange, coupling, threaded system, fitting).

The thermally conductive portion has a higher coefficient of thermal conductivity than the surrounding material. In this way, such conductive portion conducts the heat from the inner cavity of the tube towards the radially outer surface of the tube where the temperature sensor may detect the temperature of the conveyed fluid.

According to a preferred embodiment, the tube section comprises at least two tubular elements, radially overlapped, where the radially outermost element has a greater thermal conductivity than the thermal conductivity of the underlying tube section (radially innermost), which in turn incorporates the thermally conductive portion, which extends from the tube cavity (so as to be in contact with the fluid) towards the outer covering through at least part of the radial thickness of such innermost tube section.

These and other objects and advantages are achieved, according to one aspect of the invention, by a tube section for conveying fluids, and by an assembly comprising a temperature sensor associated with such tube, having the features defined in the accompanying claims.

### Brief description of the drawings

The functional and structural features of some of the preferred embodiments of a tube section and an assembly for conveying fluids and measuring the temperature thereof will now be described. Reference is made to the accompanying drawings, wherein:

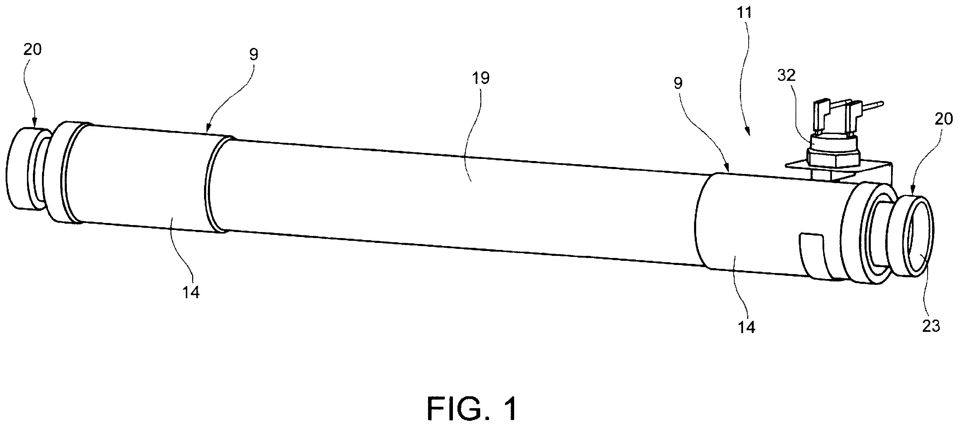

- figure 1 is a schematic perspective view of an assembly for measuring the temperature of a fluid comprising a temperature sensor associated with a terminal section of a tube for conveying a fluid according to an embodiment of the invention;

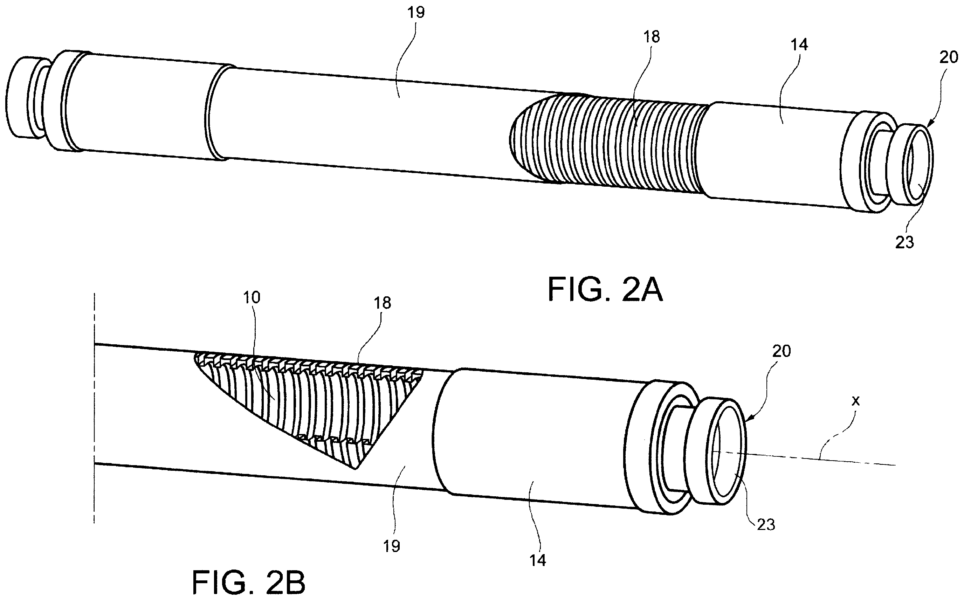

- figures 2A and 2B are respectively a schematic perspective view of a tube comprising a corrugated section covered with a sheath and comprised between two end sections coupled with connecting fittings, and a schematic perspective view in partial cross-section of the same tube, wherein the fluid-conveying cavity within the corrugated section is visible, according to an embodiment of the invention;

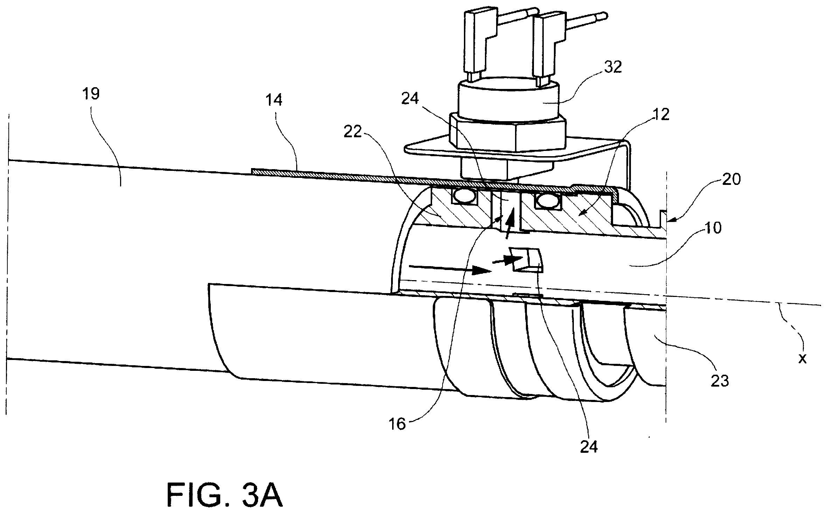

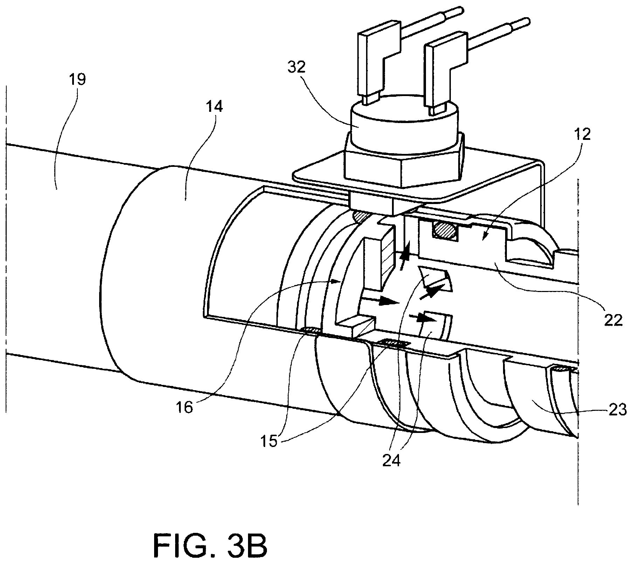

- figures 3A and 3B are two schematic perspective views of an end section of a tube showing the radial stratification of the tubular elements forming part of such end section where the thermally conductive portion is configured in the form of a plurality of radial holes according to an embodiment not falling within the scope of the claims;

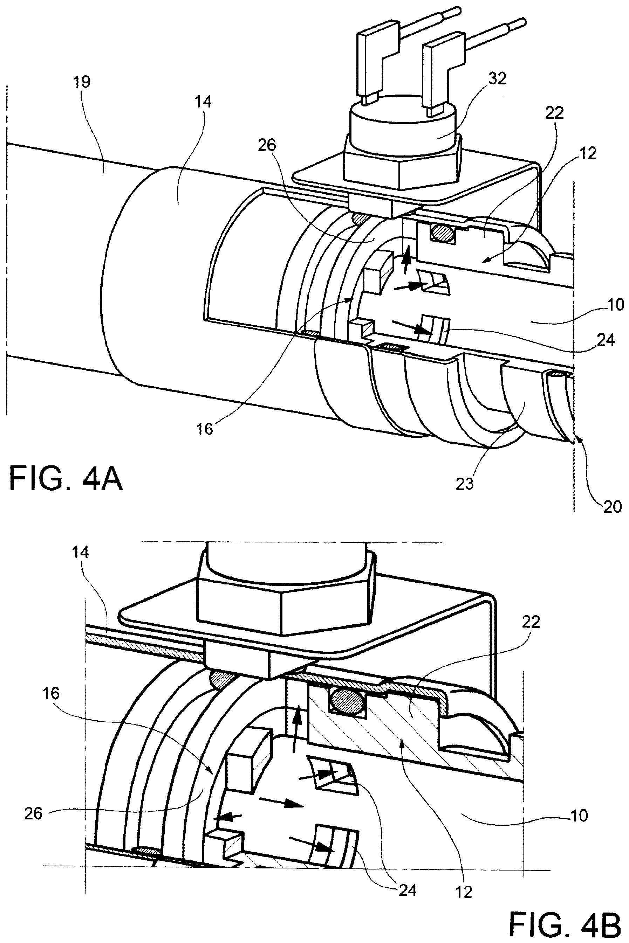

- figures 4A and 4B are two schematic perspective views in partial cross-section, respectively of an end section of a tube, wherein the thermally conductive portion is configured in the form of an annular groove, and of a detail of figure 4A, according to an embodiment not falling within the scope of the claims;

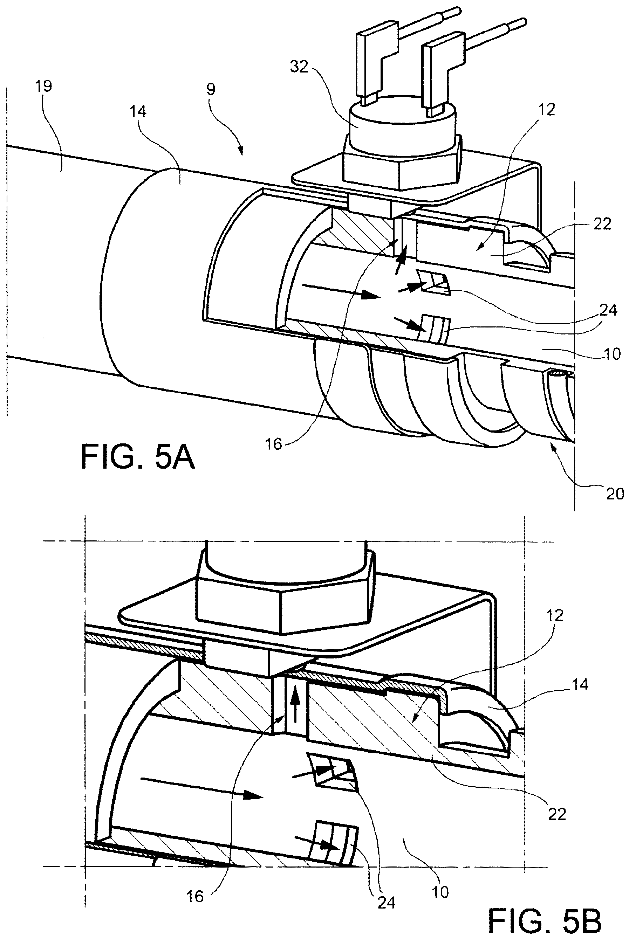

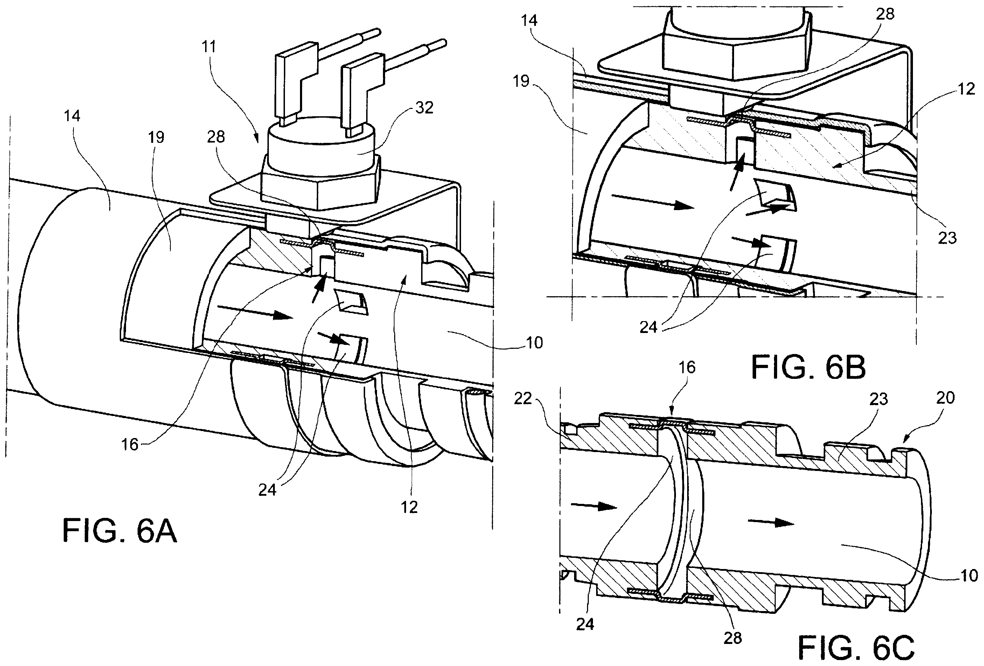

- figures 5A and 5B are two schematic perspective views in partial cross-section of an end section of a tube, wherein the thermally conductive portion is configured in the form of a plurality of radial blind holes, and a detail of figure 6A, according to an embodiment not falling within the scope of the claims;
- figures 6A, 6B and 6C are schematic perspective views in partial cross-section respectively of an end section of a tube, wherein the thermally conductive portion is configured in the form of a plurality of radial holes ending with an annular insert (in the example shown, in contact with the outer covering of the tube), a detail of figure 6A, and a connecting fitting or insert, whereon such annular insert is mounted, according to an embodiment of the invention;

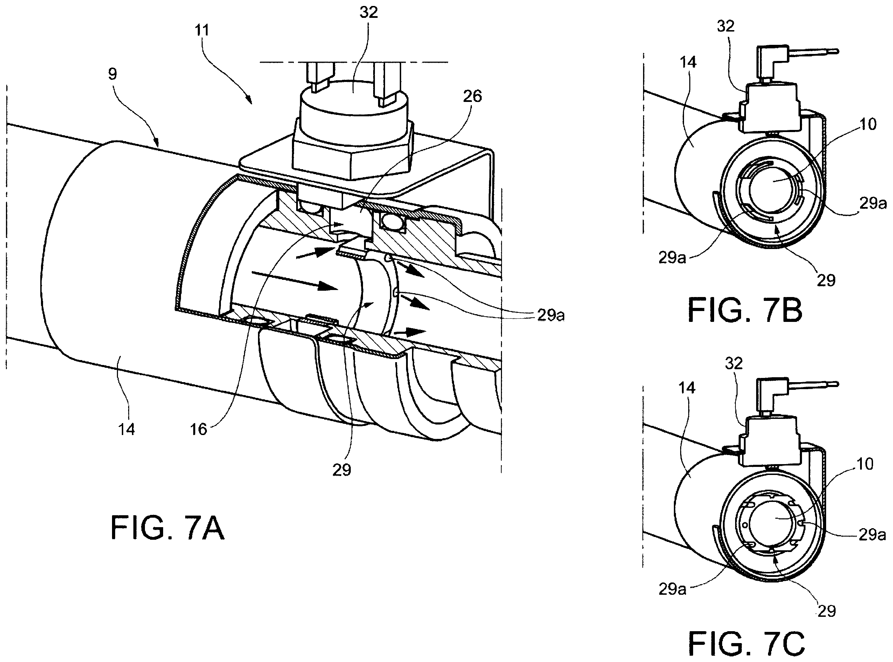

- figures 7A, 7B and 7C are respectively a schematic perspective view of a section of the end of a tube, wherein the thermally conductive portion is configured in the form of a concentric annular protrusion with respect to a radial groove obtained in the thickness of the radially inner tubular element, and two schematic perspective views of possible configurations of the channels inside such annular protrusion, according to some embodiments not falling within the scope of the claims;

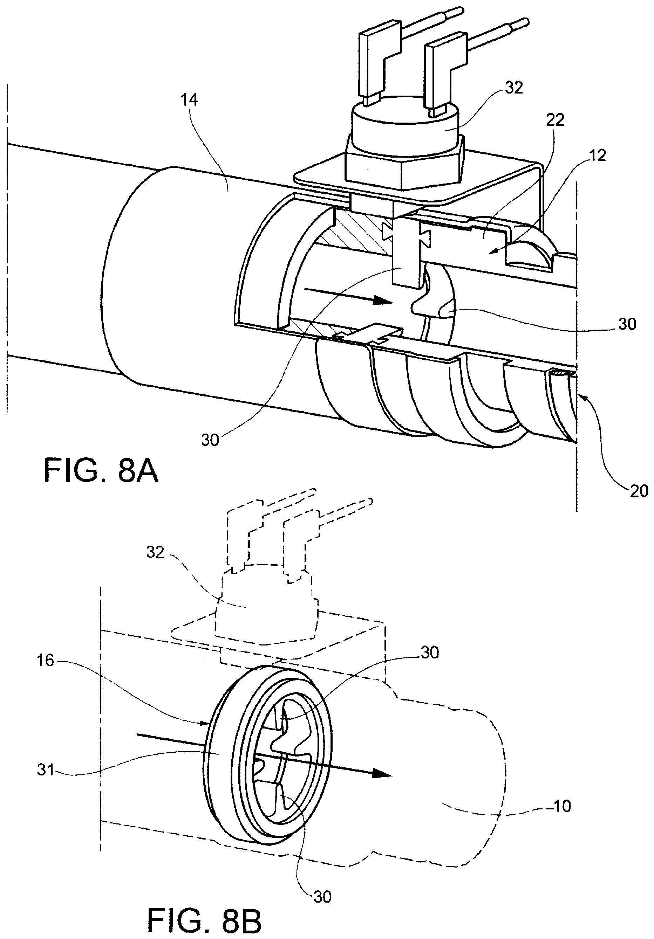

- figures 8A and 8B are respectively a schematic perspective view in partial cross-section of a tube, wherein the thermally conductive portion is configured in the form of a plurality of fins radially protruding towards the inside of the fluid-conveying cavity, and a schematic perspective view in semi-transparency of an annular body, according to an embodiment of the invention;

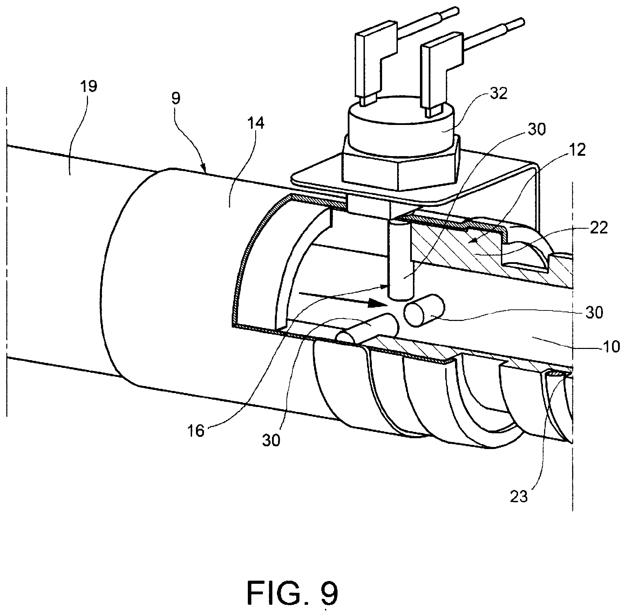

- figure 9 is a schematic perspective view in partial cross-section of a section of the tube end, wherein the thermally conductive portion is configured in the form of a plurality of cylinders radially protruding towards the inside of the fluid-conveying cavity, according to an embodiment of the invention;

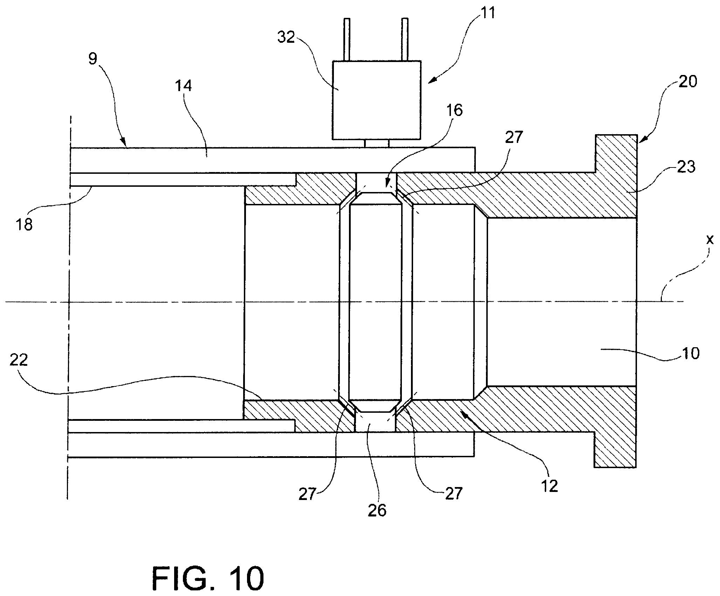

- figure 10 is a schematic view in lateral cross-section of an end section of the tube, wherein the thermally conductive portion is configured as an annular groove, in fluid communication with the inner cavity of the tube through converging ducts, obtained in the thickness of the radially inner tubular element, according to an embodiment not falling within the scope of the claims;

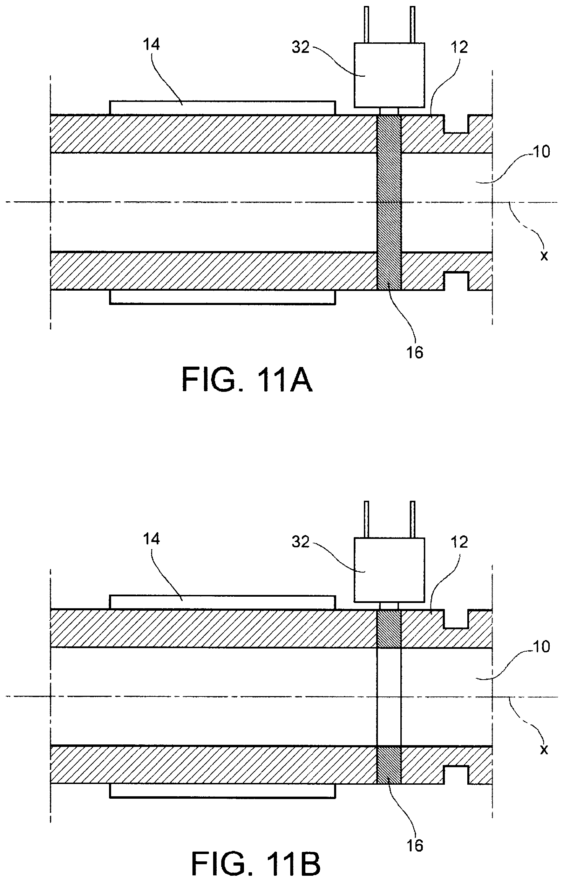

- figures 11A and 11B are schematic views in lateral cross-section of a tube section, wherein the thermally conductive portion is in direct contact with the temperature sensor, according to two embodiments of the invention;

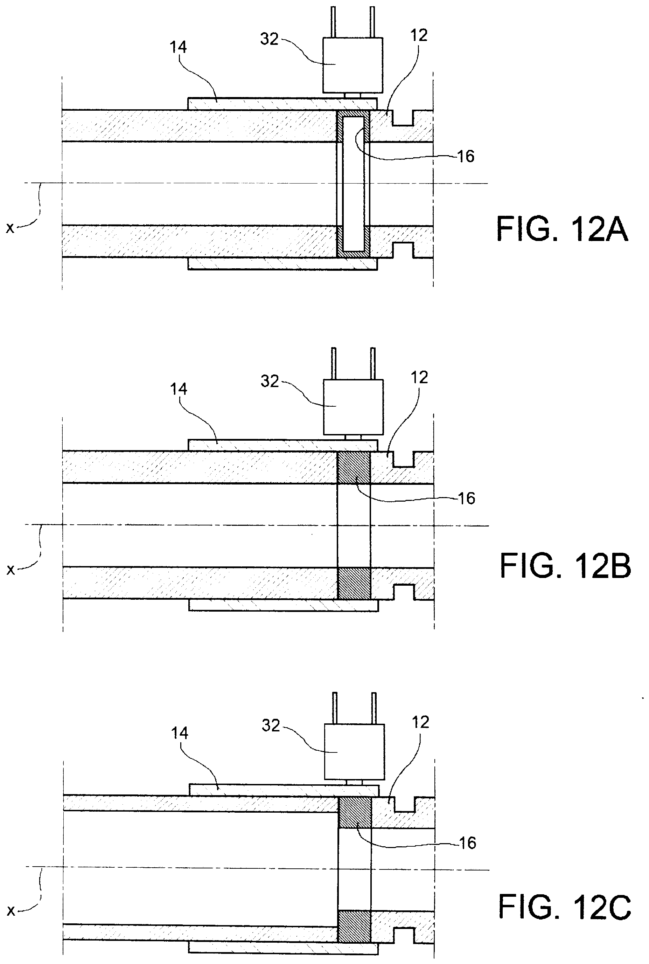

- figures 12A-12C are schematic views in lateral cross-section of a tube section, according to some alternative embodiments of the invention; and

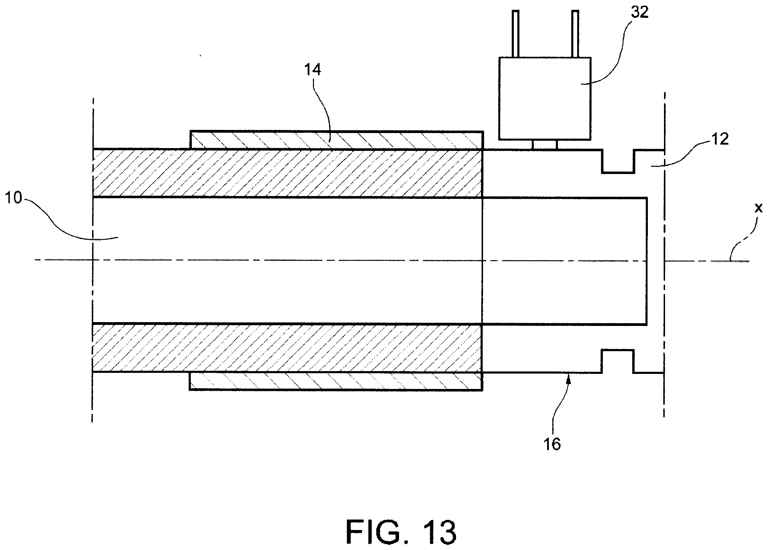

- figure 13 is a schematic view in lateral cross-section of a tube section, wherein the thermal bridge is formed by the end insert, made of thermally conductive material, according to an embodiment not falling within the scope of the claims.

### Detailed description

Before explaining a plurality of embodiments of the invention in detail, it should be clarified that the invention is not limited in its application to the details of construction and to the configuration of the components presented in the following description or illustrated in the drawings.

The invention may assume other embodiments and may be implemented or achieved in essentially different ways. It should also be understood that the phraseology and terminology have descriptive purposes and should not be construed as limiting.

For example, referring to the figures, a tube section 9 for conveying fluids (advantageously, circulating water for a thermo-hydraulic circuit) comprises a first tubular element 12, which defines at least in part a cavity 10, extending along a longitudinal axis x of the tube section 9 and adapted to conveying a fluid.

The first tubular element 12 comprises in turn a thermally conductive portion 16, having a thermal conductivity higher than the thermal conductivity of such first tubular element 12, such thermally conductive portion 16 extending radially through at least part of the radial thickness of the first tubular element 12, such that the thermally conductive portion 16 is able to create a thermal bridge between the fluid and the radially outer surface of the tube 9.

According to the preferred embodiment, the tube section 9 further comprises a second radially outer tubular element 14. The first tubular element 12, radially more internal than such second tubular element 14, has a thermal conductivity lower than the thermal conductivity of the latter, and is configured in such a way that the thermally conductive portion 16 is able to create a thermal bridge between the fluid and such second tubular element 14.

Advantageously, the second tubular element 14 is a metallic element (e.g. copper, aluminum, etc.), or other heat-conducting material.

According to an embodiment (not illustrated), the first tubular element 12 comprises a portion of a flexible tube 18 (advantageously, a corrugated tube) and/or a sheath 19 that covers such flexible tube 18. Thus, according to this embodiment, the thermal bridge will be made through the inner tube 18 (and/or the sheath 19), so that the duct 10, inside the flexible tube 18, exchanges heat with the radially outer surface of the tube 9 (or with the outer tubular element 14, where present).

According to a preferred alternative (and illustrated, by way of example, in figures 3A to 10), the first tubular element 12 through which the thermal bridge is created is a connecting insert or fitting 20 (known per se), comprising a first connecting portion 22, coupled to the second tubular element 14, and a second connecting portion 23, axially protruding from the tube section 9 and suitable for coupling the latter with an outer element (not illustrated). For example, the fitting 20 may connect the tube 9 to an exchanger or other boiler component, to a same boiler, or other element of a thermo-hydraulic system.

In the examples shown, the outer tubular element 12 is a cylindrical bushing, located at the end of a flexible tube 18 (in a known manner), to hold together the sheath 19 and the tube 18, and/or allow the tube 18 to be coupled with the connecting fitting 20.

According to an embodiment, the thermally conductive portion 16 comprises at least one radial hole 24, which extends from the radially innermost section of the first tubular element 12 towards the radially outermost section of such first tubular element 12.

Advantageously, the thermally conductive portion 16 comprises a plurality of radial holes 24, circumferentially spaced along the first tubular element 12.

According to an embodiment (e.g. shown in figures 3A and 3B), the radial holes 24 pass through the radial thickness of the first tubular element 12. Advantageously, such radial through-holes 24 may create a fluid communication between the cavity 10 and the second tubular element 14, so that the fluid may come into contact with such second tubular element 14 by passing through the radial hole 24 (as shown by way of example by the arrows in the figures, which schematically illustrate the directions wherein the fluid may flow).

According to an embodiment (illustrated, for example, in figures 4A and 4B), the thermally conductive portion 16 comprises an annular groove 26 radially external to the radial holes 24 and superiorly delimited radially by the second tubular element 14; through such radial holes 24 such annular groove 26 is in fluid communication with the cavity 10 of the tube section 9. Thus, the fluid may fill the annular groove 26, touching the inner wall of the second tubular element 14, so as to exchange heat with the latter.

According to an alternative embodiment (illustrated for example in figures 5A and 5B), the radial holes 24 are blind holes, so that, at the radial hole 24, the radial thickness of the first tubular element 12 (which, according to a preferred embodiment, is in contact with the second tubular element 14) is other than zero. Such radial thickness (as shown by way of example in the aforesaid figures) will be thin enough to allow sufficient heat exchange between the fluid in the hole 24 and the radially outer surface of the tube 9 (i.e., the inner wall of the second tubular element 14, if present), but so as not to interrupt the continuity of hydraulic insulation of the tube along the axis. In essence, it does not create a point of potential leakage of fluid from the tube to the outside, allowing any gaskets 15 to be eliminated.

According to an embodiment (illustrated, for example, in figures 6A to 6C), the thermally conductive portion 16 comprises an annular insert 28 (advantageously co-molded with the first tubular element 12) in contact with the second tubular element 14. Such annular insert 28, advantageously in the form of a flat or possibly shaped annular band (for example omega-shaped, as in figures 6A, 6B, 6C), occludes the radially outermost section of the radial holes 24, so that the fluid, entering the hole 24, touches the annular insert 28, from which heat is transmitted to the radially outermost surface of the tube 9 (or to the radially outermost second tubular element 14). In the embodiment of figure 6C one finds that the first tubular element 12 is made in two parts 22, 23 with respect to the x-axis, and held together by such annular insert 28; i.e. an annular recess is made with the element 28 and the element 14.

According to an embodiment (illustrated for example in figures 7A to 7C), the thermally conductive portion 16 comprises an annular distributor 29, which forms at least part of the radially lower wall of an annular groove 26, obtained in the radial thickness of the first tubular element 12, where the radially upper wall of this annular groove 26 is formed by the radially outer surface of the tube 9 (or by the inner wall of the second tubular element 14). In other words, the annular groove 26 is defined superiorly by the radially outer surface of the tube 9 (according to a non-illustrated embodiment) or by the second tubular element 14, and inferiorly by the annular distributor 29, which is configured as a ring that protrudes radially from the first tubular element 12 towards the longitudinal axis x of the cavity 10. In the radial thickness of the annular distributor 29 there are openings or slots 29a, passing in the axial direction, through which the fluid conveyed in the cavity 10 may flow. Such openings 29a are in fluid communication with the inside of the annular groove 26, so that the fluid may enter the annular groove 26 through the aforesaid openings 29a. Due to the geometry of the annular distributor 29 (which is radially more internal than the annular groove 26), the fluid is forced to pass over a step to enter the annular groove 26 (see, for example, figure 7A). In this way, turbulence is generated inside the annular groove, which increases the heat exchange with the second tubular element 14.

The openings 29a may have different shapes (see, for example, figures 7B and 7C), and may be configured for example as circumferential (fig. 7B) or purely axial (fig. 7C) slots.

According to an embodiment (illustrated, for example, in figures 8A to 9), the thermally conductive portion 16 comprises at least one thermally conductive radial insert 30, protruding radially from the first tubular element 12 towards the longitudinal axis x of the cavity 10.

Advantageously, the thermally conductive portion 16 comprises a plurality of radial inserts 30, circumferentially spaced along the first tubular element 12. Advantageously, such radial inserts 30 are connected circumferentially by an annular body 31, radially outermost and in contact with the second tubular element 14. Advantageously, the radial inserts 30 are made of metallic materials (e.g., copper, aluminum, etc.) or heat-conducting plastic as known in the art and available in products such as Therma-Tech^{™} from the Polyone Corporation.

According to an embodiment (illustrated, for example, in figures 8A and 8B), the radial inserts 30 are configured as wedges or fins, extending towards the inside of the cavity 10.

According to an alternative embodiment (illustrated for example in figure 9), the radial inserts 30 are configured as cylinders.

In a manner not illustrated, the radial inserts 30 have an extension substantially equal to at least the diameter of the cavity 10.

According to an alternative embodiment (illustrated for example in figure 10), the thermally conductive portion 16 comprises an annular groove 26, delimited superiorly (in a radial direction) by the second tubular element 14 and in fluid communication with the cavity 10 by means of pairs of secondary holes 27, converging towards the inside of the groove 26, so that the fluid enters the annular groove 26 from one of the holes 27 and exits from the other, creating a turbulence that increases the heat exchange with the second tubular element 14. According to a non-illustrated alternative, the annular groove 26 may be delimited superiorly by a residual thickness of the first tubular element 12, instead of the second tubular element 14.

There may also be gaskets 15 on the sides of the radial holes 24 or the annular grooves 26 to prevent fluid leakage at the interface between the first and second tubular element 12, 14.

According to some embodiments (illustrated, for example, in figures 11B to 12C), the thermally conductive portion 16 may comprise a ring-shaped body made of thermally conductive material, with radial extension substantially equal to or greater than the radial thickness of the first tubular element 12. According to an embodiment, the annular body may have a C-shaped section, as illustrated by way of example in figure 12A.

According to a preferred embodiment, a measurement assembly 11 of the temperature of a fluid comprises a tube section 9, according to any of the methods described above, and further comprises a temperature sensor 32, suitable for measuring the temperature of the second tubular element 14 near or at the thermally conductive portion 16.

For example, the temperature sensor 32 may be a thermostat, placed in contact with the area of the second tubular element 14 on which the thermal bridge rests.

As may be seen from the above description, the temperature sensor 32 may be placed directly in contact with the thermally conductive portion 16 (in the absence of the second tubular element 14), or in contact with the second tubular element 14, in the presence of the latter.

Moreover, according to some preferred embodiments, the thermally conductive portion 16 and/or the second tubular element 14 extends along the entire circumference of the tube 9, so as to facilitate the positioning of the sensor 32, which may be placed in a timely manner (and not continuously) along the circumference of the tube 9.

According to another embodiment, illustrated by way of example in figure 13, the thermal bridge is formed by the entire portion of the end of the tube 9, for example by an insert 20 made of thermally conductive material.

In the entire present description and in the claims, the terms and expressions indicating positions and orientations, such as "longitudinal" and "radial", clear per se, refer to the x-axis.

The advantage obtained is that of providing a solution that is easy to apply, allowing the temperature of a fluid to be measured from outside the tube used to convey it, even when the tube has a very low thermal conductivity.

Different aspects and embodiments of a tube and an assembly for conveying fluids and the measurement of the temperature thereof, according to the invention, have been described. It is understood that each embodiment may be combined with any other embodiment. The invention, moreover, is not limited to the described embodiments, but may vary within the scope defined by the accompanying claims.

## Claims

1. Tube section (9) for conveying fluids, comprising a first tubular element (12), which at least partially defines a cavity (10), extended along a longitudinal axis x of the tube section (9) and suitable for conveying a fluid, said first tubular element (12) being configured to be in direct contact with the fluid at said cavity (10);
wherein said first tubular element (12) comprises a thermally conductive portion (16), having a thermal conductivity higher than the thermal conductivity of said first tubular element (12), said thermally conductive portion (16) extending radially through at least part of the thickness of the first tubular element (12), so that the thermally conductive portion (16) is able to create a thermal bridge between the fluid and the radially outer surface of the tube section (9),
**characterized in that** said thermally conductive portion (16) is configured to be in direct contact with the fluid.

2. A tube section according to claim 1, comprising a radially outer second tubular element (14), the first tubular element (12) having a thermal conductivity lower than the thermal conductivity of said second radially outer tubular element (14), and being configured in such a way that the thermally conductive portion (16) is able to create a thermal bridge between the fluid and said second tubular element (14).

3. A tube section according to claim 2, wherein the second tubular element (14) is a metallic element.

4. A tube section according to any one of the preceding claims, wherein the first tubular element (12) comprises a portion of a flexible tube (18) and/or a sheath (19) which covers said flexible tube (18).

5. Tube section according to one of claims 2 to 4, wherein the first tubular element (12) is an insert (20) comprising a first connecting portion (22), coupled to the second tubular element (14), and a second connecting portion (23), axially protruding from the tube section (9) and adapted to couple said tube section (9) with an outer element.

6. Tube section according to any one of the preceding claims, wherein the thermally conductive portion (16) comprises at least one radial hole (24), which extends from the radially innermost section of the first tubular element (12) towards the radially outermost section of said first tubular element (12).

7. Tube section according to claim 6, wherein the thermally conductive portion (16) comprises a plurality of radial holes (24), circumferentially spaced along the first tubular element (12).

8. Tube section according to claim 6 or 7, wherein the radial holes (24) are blind holes, so that the radial thickness of the first tubular element (12) at the radial hole (24) and towards the radially outer surface of the tube (9) is other than zero.

9. Tube section according to claim 6 or 7, wherein the radial holes (24) pass through the radial thickness of the first tubular element (12).

10. Tube section according to claim 9, wherein the thermally conductive portion (16) comprises an annular groove (26) radially external to the radial holes (24) and superiorly delimited radially by the second tubular element (14), through which radial holes (24) said annular groove (26) is in fluid communication with the cavity (10) of the tube section (9).

11. Tube section according to claim 9, wherein the thermally conductive portion (16) comprises an annular insert (28) in contact with the second tubular element (14), said annular insert (28) occluding the radially outermost section of the radial holes (24).

12. Tube section according to any one of the preceding claims, wherein the thermally conductive portion (16) comprises at least one radial insert (30), radially projecting from the first tubular element (12) towards the longitudinal axis x of the cavity (10).

13. Tube section according to claim 12, wherein the thermally conductive portion (16) comprises a plurality of radial inserts (30), circumferentially spaced along the first tubular element (12).

14. Tube section according to claim 12 or 13, wherein the radial inserts (30) are configured as fins.

15. Tube section according to claim 12 or 13, wherein the radial inserts (30) are configured as cylinders.

16. Tube section according to claim 15, wherein the radial inserts (30) have an extension substantially at least equal to the diameter of the cavity (10).

17. Tube section according to any one of the preceding claims, wherein the thermally conductive portion (16) comprises a ring body made of a thermally conductive material, having a radial extension substantially equal to or greater than the radial thickness of the first tubular element (12).

18. Measuring assembly (11) of the temperature of a fluid, comprising a tube section (9) according to any one of the preceding claims, and further comprising a temperature sensor (32), suitable for measuring the temperature of the radially outer surface of the tube section (9) near or at the thermally conductive portion (16).

## Patentansprüche

1. Schlauchabschnitt (9) zum Fördern von Flüssigkeiten, umfassend ein erstes rohrförmiges Element (12), das mindestens teilweise einen Hohlraum (10) definiert, der sich entlang einer Längsachse x des Schlauchabschnitts (9) erstreckt und das geeignet ist, eine Flüssigkeit zu fördern, wobei das erste rohrförmige Element (12) dazu konfiguriert ist, in direktem Kontakt mit der Flüssigkeit an dem Hohlraum (10) zu stehen;
wobei das erste rohrförmige Element (12) einen wärmeleitenden Abschnitt (16) umfasst, der eine Wärmeleitfähigkeit aufweist, die höher als die Wärmeleitfähigkeit des ersten rohrförmige Elements (12) ist, wobei sich der wärmeleitende Abschnitt (16) radial durch mindestens einen Teil der Dicke des ersten rohrförmigen Elements (12) erstreckt, sodass der wärmeleitende Abschnitt (16) in der Lage ist, eine Wärmebrücke zwischen der Flüssigkeit und der radial äußeren Oberfläche des Schlauchabschnitts (9) zu bilden,
**dadurch gekennzeichnet, dass** der wärmeleitende Abschnitt (16) dazu konfiguriert ist, in direktem Kontakt mit der Flüssigkeit zu stehen.

2. Schlauchabschnitt nach Anspruch 1, umfassend ein radial äußeres zweites rohrförmiges Element (14), wobei das erste rohrförmige Element (12) eine Wärmeleitfähigkeit aufweist, die niedriger als die Wärmeleitfähigkeit des zweiten radial äußeren rohrförmigen Elements (14) ist und das dazu konfiguriert ist, sodass der wärmeleitende Abschnitt (16) in der Lage ist, eine Wärmebrücke zwischen der Flüssigkeit und dem zweiten rohrförmigen Element (14) zu bilden.

3. Schlauchabschnitt nach Anspruch 2, wobei das zweite rohrförmige Element (14) ein metallisches Element ist.

4. Schlauchabschnitt nach einem der vorhergehenden Ansprüche, wobei das erste rohrförmige Element (12) einen Abschnitt eines flexiblen Schlauchs (18) und/oder eine Hülle (19) umfasst, die den flexiblen Schlauch (18) abdeckt.

5. Schlauchabschnitt nach einem der Ansprüche 2 bis 4, wobei das erste rohrförmige Element (12) ein Einsatzstück (20) ist, das einen ersten Verbindungsabschnitt (22) umfasst, der mit dem zweiten rohrförmigen Element (14) gekoppelt ist, und einen zweiten Verbindungsabschnitt (23), der axial aus dem Schlauchabschnitt (9) vorsteht und eingerichtet ist, den Schlauchabschnitt (9) mit einem äußeren Element zu koppeln.

6. Schlauchabschnitt nach einem der vorhergehenden Ansprüche, wobei der wärmeleitende Abschnitt (16) mindestens eine Radialbohrung (24) umfasst, die sich von dem radial innersten Abschnitt des ersten rohrförmigen Elements (12) zu dem radial äußersten Abschnitt des ersten rohrförmigen Elements (12) erstreckt.

7. Schlauchabschnitt nach Anspruch 6, wobei der wärmeleitende Abschnitt (16) eine Mehrzahl von Radialbohrungen (24) umfasst, die entlang des ersten rohrförmigen Elements (12) umlaufend beabstandet sind.

8. Schlauchabschnitt nach Anspruch 6 oder 7, wobei die Radialbohrungen (24) Sackbohrungen sind, sodass die radiale Dicke des ersten rohrförmigen Elements (12) an der Radialbohrung (24) und zu der radial äußeren Oberfläche des Schlauchs (9) ungleich Null ist.

9. Schlauchabschnitt nach Anspruch 6 oder 7, wobei die Radialbohrungen (24) durch die radiale Dicke des ersten rohrförmigen Elements (12) durchdringen.

10. Schlauchabschnitt nach Anspruch 9, wobei der wärmeleitende Abschnitt (16) eine ringförmige Nut (26) umfasst, die radial außerhalb der Radialbohrungen (24) liegt und radial oben durch das zweite rohrförmige Element (14) begrenzt wird, wobei die ringförmige Nut (26) durch die Radialbohrungen (24) in Fluidverbindung mit dem Hohlraum (10) des Schlauchabschnitts (9) steht.

11. Schlauchabschnitt nach Anspruch 9, wobei der wärmeleitende Abschnitt (16) einen ringförmigen Einsatz (28) umfasst, der mit dem zweiten rohrförmigen Element (14) in Kontakt steht, wobei der ringförmige Einsatz (28) den radial äußersten Abschnitt der Radialbohrungen (24) verschließt.

12. Schlauchabschnitt nach einem der vorhergehenden Ansprüche, wobei der wärmeleitende Abschnitt (16) mindestens einen radialen Einsatz (30) umfasst, der radial aus dem ersten rohrförmigen Element (12) zu der Längsachse x des Hohlraums (10) vorsteht.

13. Schlauchabschnitt nach Anspruch 12, wobei der wärmeleitende Abschnitt (16) eine Mehrzahl von radialen Einsätzen (30) umfasst, die entlang des ersten rohrförmigen Elements (12) umlaufend beabstandet sind.

14. Schlauchabschnitt nach Anspruch 12 oder 13, wobei die radialen Einsätze (30) als Flügel ausgebildet sind.

15. Schlauchabschnitt nach Anspruch 12 oder 13, wobei die radialen Einsätze (30) als Zylinder ausgebildet sind.

16. Schlauchabschnitt nach Anspruch 15, wobei die radialen Einsätze (30) eine Erstreckung aufweisen, die im Wesentlichen mindestens dem Durchmesser des Hohlraums (10) gleich ist.

17. Schlauchabschnitt nach einem der vorhergehenden Ansprüche, wobei der wärmeleitende Abschnitt (16) einen ringförmigen Körper umfasst, der aus einem wärmeleitenden Material besteht, der eine radiale Erstreckung aufweist, die im Wesentlichen gleich oder größer als die radiale Dicke des ersten rohrförmigen Elements (12) ist.

18. Messgruppe (11) der Temperatur einer Flüssigkeit, umfassend einen Schlauchabschnitt (9) nach einem der vorhergehenden Ansprüche, und ferner umfassend einen Temperatursensor (32), der geeignet ist, die Temperatur der radial äußeren Oberfläche des Schlauchabschnitts (9) in der Nähe des oder an dem wärmeleitenden Abschnitt (16) zu messen.

## Revendications

1. Section de tube (9) pour le transport de fluides, comprenant un premier élément tubulaire (12), qui définit au moins partiellement une cavité (10), s'étendant selon un axe longitudinal x de la section de tube (9) et apte à transporter un fluide, ledit premier élément tubulaire (12) étant configuré pour être en contact direct avec le fluide au niveau de ladite cavité (10) ;
dans lequel ledit premier élément tubulaire (12) comprend une portion thermiquement conductrice (16), ayant une conductivité thermique supérieure à la conductivité thermique dudit premier élément tubulaire (12), ladite portion thermiquement conductrice (16) s'étendant radialement à travers au moins une partie de l'épaisseur du premier élément tubulaire (12), de sorte que la portion thermiquement conductrice (16) est apte à créer un pont thermique entre le fluide et la surface radiale externe de la section de tube (9),
**caractérisée en ce que** ladite portion thermiquement conductrice (16) est configurée pour être en contact direct avec le fluide.

2. Section de tube selon la revendication 1, comprenant un second élément tubulaire radialement externe (14), le premier élément tubulaire (12) ayant une conductivité thermique inférieure à la conductivité thermique dudit second élément tubulaire radialement externe (14), et étant configuré de manière telle que la portion thermiquement conductrice (16) est apte à créer un pont thermique entre le fluide et ledit second élément tubulaire (14).

3. Section de tube selon la revendication 2, dans laquelle le second élément tubulaire (14) est un élément métallique.

4. Section de tube selon l'une quelconque des revendications précédentes, dans laquelle le premier élément tubulaire (12) comprend une portion d'un tube flexible (18) et/ou une gaine (19) qui recouvre ledit tube flexible (18).

5. Section de tube selon l'une des revendications 2 à 4, dans laquelle le premier élément tubulaire (12) est un insert (20) comprenant une première portion de raccordement (22), couplée au second élément tubulaire (14), et une seconde portion de raccordement (23), s'étendant axialement à partir de la section de tube (9) et apte à coupler ladite section de tube (9) avec un élément externe.

6. Section de tube selon l'une quelconque des revendications précédentes, dans laquelle la portion thermiquement conductrice (16) comprend au moins un trou radial (24), qui s'étend depuis la section radialement la plus interne du premier élément tubulaire (12) vers la section radialement la plus externe dudit premier élément tubulaire (12).

7. Section de tube selon la revendication 6, dans laquelle la portion thermiquement conductrice (16) comprend une pluralité de trous radiaux (24), espacés circonférentiellement le long du premier élément tubulaire (12).

8. Section de tube selon la revendication 6 ou 7, dans laquelle les trous radiaux (24) sont des trous borgnes, de sorte que l'épaisseur radiale du premier élément tubulaire (12) au niveau du trou radial (24) et vers la surface radiale externe du tube (9) est différente de zéro.

9. Section de tube selon la revendication 6 ou 7, dans laquelle les trous radiaux (24) traversent l'épaisseur radiale du premier élément tubulaire (12).

10. Section de tube selon la revendication 9, dans laquelle la portion thermiquement conductrice (16) comprend une gorge annulaire (26) radialement externe aux trous radiaux (24) et délimitée radialement vers le haut par le second élément tubulaire (14), par laquelle les trous radiaux (24) mettent ladite gorge annulaire (26) en communication fluidique avec la cavité (10) de la section de tube (9).

11. Section de tube selon la revendication 9, dans laquelle la portion thermiquement conductrice (16) comprend un insert annulaire (28) en contact avec le second élément tubulaire (14), ledit insert annulaire (28) obturant la section radialement la plus externe des trous radiaux (24).

12. Section de tube selon l'une quelconque des revendications précédentes, dans laquelle la portion thermiquement conductrice (16) comprend au moins un insert radial (30), s'étendant radialement à partir du premier élément tubulaire (12) vers l'axe longitudinal x de la cavité (10).

13. Section de tube selon la revendication 12, dans laquelle la portion thermiquement conductrice (16) comprend une pluralité d'inserts radiaux (30), espacés circonférentiellement le long du premier élément tubulaire (12).

14. Section de tube selon la revendication 12 ou 13, dans laquelle les inserts radiaux (30) sont configurés comme des ailettes.

15. Section de tube selon la revendication 12 ou 13, dans laquelle les inserts radiaux (30) sont configurés comme des cylindres.

16. Section de tube selon la revendication 15, dans laquelle les inserts radiaux (30) présentent une extension sensiblement au moins égale au diamètre de la cavité (10).

17. Section de tube selon l'une quelconque des revendications précédentes, dans laquelle la portion thermiquement conductrice (16) comprend un corps annulaire constitué d'un matériau thermiquement conducteur, ayant une extension radiale sensiblement égale ou supérieure à l'épaisseur radiale du premier élément tubulaire (12).

18. Ensemble de mesure (11) de la température d'un fluide, comprenant une section de tube (9) selon l'une quelconque des revendications précédentes, et comprenant en outre un capteur de température (32), apte à mesurer la température de la surface radiale externe de la section de tube (9) à proximité ou au niveau de la portion thermiquement conductrice (16).
